# EUROPEAN PATENT APPLICATION

(11) **EP 2 704 380 A1**
(43) Date of publication of application: **05.03.2014**
(21) Application number: 12182808.1
(22) Date of filing: 03.09.2012
(51) Int. Cl.: H04L 12/851, H04L 12/801

(54) **Congestion signalling in a communications network**

(71) Applicant: Telefonaktiebolaget L M Ericsson (publ), 164 83 Stockholm (SE)
(72) Inventor: Ludwig, Reiner, 52393 Hürtgenwald (DE)
(74) Representative: Schwarz, Markku

(57) **Abstract**

Various embodiments relate to a policy controller (30) of a communications network comprising a processing unit being configured to select a congestion signalling policy for data traffic of a user equipment connected to the communications network. The policy controller (30) is configured to send the congestion signalling policy to a node (26) of the communications network. The congestion signalling policy includes instructions for the node (26) when to signal congestion.

## Description

### Technical field

Various embodiments relate to a policy controller of a communications network being configured to select a congestion signalling policy including instructions for a node of the communications network when to signal congestion.

### Background

Signalling or indication or notification of congestion in a communications network is known, e.g., as part of the explicit congestion notification (ECN). Details of ECN can be found in the Internet Engineering Task Force (IETF) RFC 3168. The ECN technique relies on dedicated bits in the header of data packets being set accordingly by a node of the communications network if congestion is impending. Congestion can relate to, e.g., an overload situation where there are more incoming packets than processed packets in the node of the communications network which can be processed. When the ECN flagged packets reach the receiving end-point, it can then inform the sending end-point to take appropriate counter measures to reduce the data traffic volume per time.

In general, the term "congestion" can relate to many different scenarios encountered in the data plane of the communications network: for example, if the number of data packets arriving at a node of the communications network per time exceeds a threshold, an overload situation may be impending where the node cannot handle the large amount of data packets in due time. A respective indication of congestion may be a queue or buffer overflow at the node. Data packets may belong to data traffic associated with quality of service parameters such as "maximum lifetime". If the processing and forwarding time of such a data packet at the node approaches or even exceeds this "maximum lifetime", this may be referred to as significant congestion of the communications network. Using the ECN, the data plane (also referred to as forwarding plane or user plane) of the communications network can therefore warn end-points of the data traffic of incipient congestion. Appropriate counter measures may be undertaken by the end-points as a response to received ECN. Loss of data packets may therefore be avoided.

However, such techniques of signalling congestion may face certain restrictions. For example, it may only be possible to a restricted degree to control the congestions signalling individually for different users of the communications network, e.g., based on the user identity associated with the data traffic facing congestion. Moreover, the user experience for, e.g., web browsing delayed due to congestion may be significantly different than the user experience for delayed email connectivity. However, it is typically not possible or only possible to a limited degree to adapt the signalling of congestion for different applications.

### Summary

Accordingly, a need exists to provide advanced techniques of congestions signalling. In particular, a need exists for techniques which allow controlling of the congestion signalling.

This need is met by the features of the independent claims. The dependent claims define embodiments.

According to an aspect, a policy controller of a communications network is provided. The policy controller comprises an interface for communicating with a node of the communications network. The policy controller further comprises a processing unit being configured to select a congestion signalling policy for data traffic of a user equipment connected to the communications network. The interface is configured to send the congestion signalling policy to the node. The congestion signalling policy includes instructions for the node when to signal congestion.

The policy controller may be further configured to retrieve, from a subscriber profile repository, subscriber profile data of a subscriber associated with the user equipment. The processing unit may be further configured to select the congestion signalling policy based on the subscriber profile data.

The policy controller may be further configured to determine a content type of the data traffic of the user equipment. The processing unit may be further configured to select the congestion signalling policy based on the content type of the data traffic.

For example, if the content type is voice or video traffic with a variable codec rate, the processing unit may be further configured to select the congestion signalling policy based on the variable codec rate of the data traffic.

The processing unit may be further configured to select a signalling threshold for selectively signalling congestion of the communications network by the node. The instructions of the congestion signalling policy may include the selected signalling threshold.

The processing unit may be further configured to selectively set a signalling enforcement indicator for enforcing congestion signalling by the node. The instructions of the congestion signalling policy may include the signalling enforcement indicator.

According to a further aspect, a node of a communications network is provided. The node comprises an interface for communicating with a policy controller. The interface is configured to receive a congestion signalling policy for data traffic of a user equipment connected to the communications network from the policy controller. The node further comprises a processing unit being configured to selectively signal congestion of the communications network to a recipient of the data traffic based on the received congestion signalling policy.

The processing unit may be further configured to determine a current congestion status based on the data traffic. The selectively signalling congestion may be further based on the current congestion status.

For example, the congestion signalling policy may include instructions for the node when to signal congestion. The instructions of the congestion signalling policy may include a signalling threshold. The processing unit may be further configured to execute a threshold comparison of the current congestion status and the signalling threshold, wherein the selectively signalling congestion is further based on the threshold comparison.

For example, the processing unit may be further configured to, based on the congestion signalling policy, selectively signal a predefined congestion selected from the group consisting of: zero congestion, maximum congestion, intermediate congestion.

According to a further aspect, a method of controlling congestion signalling in a communications network is provided. The method comprises, in a policy controller, selecting a congestion signalling policy for data traffic of a user equipment connected to the communications network. The congestion signalling policy includes instructions for a node of the communications network when to signal congestion. The method further comprises sending the congestion signalling policy to the node.

For example, the method may further comprise retrieving, from a subscriber profile repository, subscriber profile data of a subscriber associated with the user equipment. The selecting may be further based on the subscriber profile data.

The method may further comprise determining a content type of the data traffic of the user equipment. The selecting may be further based on the content type of the data traffic.

According to a further aspect, a method of signalling congestion in a communications network is provided. The method comprises, in a node of the communications network, receiving a congestion signalling policy for data traffic of a user equipment connected to the communication network from a policy controller. The method further comprises, in the node, selectively signalling congestion of the communication network to a recipient of the data traffic based on the received congestion signalling policy.

According to a further aspect, a system for controlling congestion signalling in a communications network is provided. The system comprises the policy controller according to a further aspect of the invention; and the node of the communications network according to a further aspect of the invention.

It is to be understood that the features mentioned above and features yet to be explained below can be used not only in the respective combinations indicated, but also in other combinations or in isolation, without departing from the scope of the present invention. Features of the above-mentioned aspects and embodiments may be combined with each other in other embodiments.

In the following, the invention will be explained in further detail with respect to embodiments illustrated in the accompanying drawings.

### Brief description of the drawing

FIG. 1 schematically illustrates a Policy and Charging Control (PCC) architecture of a mobile communications network in which concepts of controlling congestion signalling according to various embodiments of the invention are applied.
FIG. 2A is a schematic illustration of a Policy and Charging Rules Function (PCRF) in which concepts of controlling congestion signalling according to various embodiments of the invention are applied.
FIG. 2B is a schematic illustration of a gateway node of the communications network handling data traffic in which a Policy and Charging Enforcement Function (PCEF) is implemented, where the PCEF is configured to receive a congestion signalling policy for the congestion signalling according to various embodiments of the invention.
FIG. 3A illustrates subscriber profile data of a subscriber associated with the data traffic.
FIG. 3B illustrates a content type of the data traffic.
FIG. 3C illustrates congestion signalling using ECN techniques.
FIG. 3D illustrates a congestion signalling policy according to an embodiment of the present invention.
FIG. 4 is a flow diagram of a method of controlling congestion signalling and of a method of signalling congestion according to various embodiments of the present invention.
FIG. 5A is a flow diagram of signalling congestion based on a congestion signalling policy according to various embodiments of the present invention.
FIG. 5B is a flow diagram of signalling congestion based on a congestion signalling policy according to various embodiments of the present invention.
FIG. 5C is a flow diagram of signalling congestion based on a congestion signalling policy according to various embodiments of the present invention.
FIG. 6 is a signalling diagram in which concepts of controlling congestion signalling according to various embodiments of the invention are implemented between an Application Function (AF), a PCRF, and a PCEF.
FIG. 7 is a signalling diagram where concepts of controlling congestion signalling according to various embodiments of the invention are implemented between a Traffic Detection Function (TDF), a PCRF, and a PCEF.

### Detailed description

In the following, the invention will be explained in more detail by referring to exemplary embodiments and to the accompanying drawings. The illustrated embodiments relate to techniques for signalling congestion in a communications network. In particular, the techniques allow for a controlling of the congestion signalling. While the signalling itself may be part of functions residing the data plane, the control of the signalling may be part of functions residing in the control plane of the communications network.

The drawings are to be regarded as being schematic representations, and elements illustrated in the drawings are not necessarily shown to scale. Rather, the various elements are represented such that their function and general purpose become apparent to a person skilled in the art. Any connection or coupling between functional blocks, devices, components or other physical or functional units shown in the drawings or described herein may also be implemented by an indirect connection or coupling. A coupling between components may also be established over a wireless connection. Functional blocks may be implemented in hardware, firmware, software or a combination thereof; this may apply in particular to the PCRF, PCEF, AF, TDF, etc.

In the illustrated examples, the communications network is a mobile communications network according to the 3GPP (Third Generation Partnership Project) technical specifications (TSs). However, other types of communications networks may be used as well; examples include wired or fixed broadband networks using, e.g., a Digital Subscriber Line (DSL) technology. Then the respective units may be subject to other technical specifications, such as according to the Broadband Forum (BBF) or IETF.

The illustrated embodiments relate to concepts of signalling congestion by a node of the communications network implementing a Policy and Charging Enforcement Function (PCEF) where the signalling of congestion is controlled by a policy controller in the form of a Policy and Charging Rule Function (PCRF). The PCEF may be part of the mobile communications network or may be an external entity. The PCRF is a node of the communications network which controls resources of the mobile communications network which may be accomplished in accordance with policies or rules configured in the PCRF.

3GPP mobile networks may be provided with a Policy and Charging Control (PCC) architecture. Details of the PCC architecture can be found in 3GPP Technical Specification (TS) 23.203. In order to manage usage of network resources, the mobile communications network may implement policy control mechanisms. For example, the PCC architecture allows the operators to achieve real-time control of their network resources, control subscriber access to services, and proactively optimize network capacity. According to various embodiments of the invention, the PCC architecture is extended to further enable control of congestion signalling.

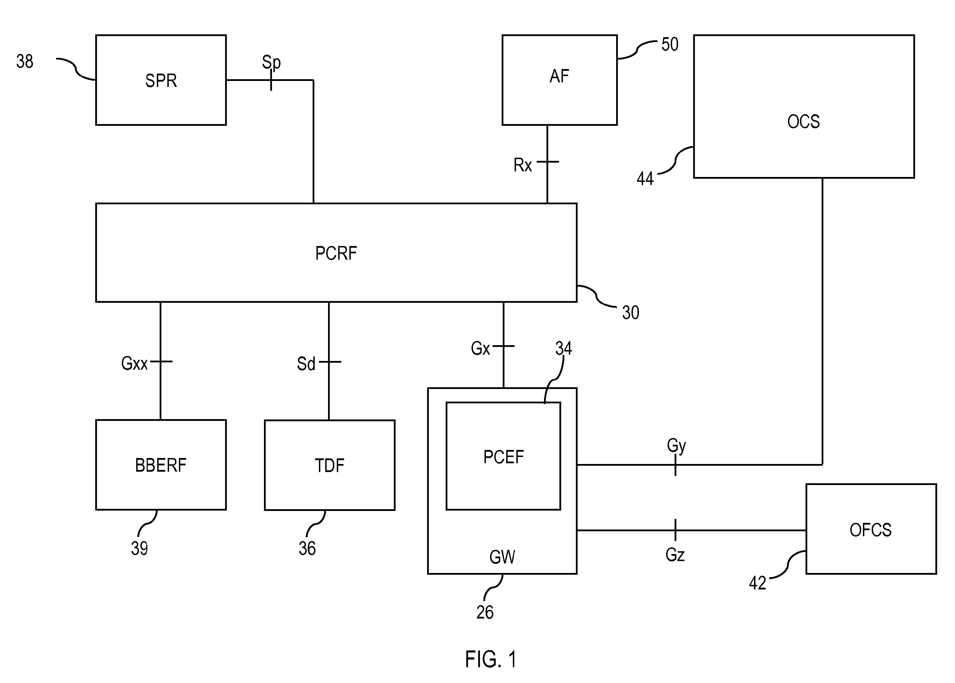

FIG. 1 schematically illustrates the PCC architecture of the mobile communications network: The PCC architecture may be implemented in accordance with 3GPP TS 23.203. As illustrated, the PCC architecture includes a gateway node (GW) 26, a policy controller in the form of PCRF 30, and a subscriber database or subscriber profile repository (SPR) 38. Further, the PCC architecture includes a PCEF 34 which is implemented in the GW 26, e.g., as hardware and / or software. For example, the GW 26 may be a Gateway GPRS Support Node (GGSN), where GPRS is the General Packet Radio Service; or the GW 26 may be a Packet Data Network Gateway (PDN-GW or P-GW) in the Long Term Evolution (LTE) framework. The GW 26 may be a single physical entity or may comprise a number of different physical entities or may even be a logical node.

In the illustrated example, the subscriber database 38 is assumed to correspond to an SPR (Subscription Profile Repository). However, it is to be understood that other types of subscriber database could be used as well, e.g., a User Data Repository (UDR). As illustrated, the PCC architecture may also include a Traffic Detection Function (TDF) 36, a Bearer Binding and Event Reporting Function (BBERF) 39, an Offline Charging System (OFCS) 42, an Online Charging System (OCS) 44, and an Application Function (AF) 50.

The PCRF 30 provides network control regarding service data flow detection, gating, Quality of Service (QoS), and flow based charging. The PCRF 30 is a functional element that is configured to execute policy control decision and flow based charging control functionalities. This control involves controlling enforcement of PCC rules by the PCEF 34 and/or controlling enforcement of QoS rules by the BBERF 39, e.g., by creating PCC rules and installing them in the PCEF 34, by creating QoS rules and installing them in the BBERF 39, or by activating or deactivating installed PCC rules or QoS rules. The PCEF 34 is the functional element that is configured to execute policy enforcement and flow based charging functionalities.

The AF 50 is an element offering packet-based services or applications that require packet-based data traffic to or from a user equipment (UE). Data traffic can relate to the Service Data Flow (SDF) as specified by 3GPP TS 23.203 or also labelled User Data Stream. The PCC architecture allows for subjecting this packet-based data traffic to dynamic policy and/or charging control. For this purpose, the AF 50 may communicate with the PCRF 30 to transfer information related to the service. The PCRF 30 may use this information for making control decisions.

For example, when the AF 50 needs to transfer data of a service or application to or from the UE, the AF 50 may communicate with the PCRF 30 to request authorization of the service by sending an Authentication/Authorization Request (AAR) command. The PCRF 30 may then authorize the service, create the corresponding PCC/QoS rules, and install them in the PCEF 34 or BBERF 39.

Furthermore, the TDF 36 may support Deep Packet Inspection (DPI), which may be based on classifying data packets, e.g., Internet Protocol (IP) data packets, according to a configured tree of rules so that they are assigned to a particular service or application.

The PCRF 30 may be configured to perform policy control decision and/or flow based charging control. The PCRF 30 may provide network control regarding detection of data traffic, gating, QoS, and flow based charging towards the PCEF 34. For this purpose, the PCRF 30 may signal PCC rules to the PCEF 34. The PCEF 34 may be configured to perform service data flow detection, policy enforcement, and flow based charging functionalities, which is typically accomplished by applying the PCC rules as signalled by the PCRF 30. Further, the PCEF 34 may also implement functionalities of packet inspection, such as DPI, and service classification. In this way data packets may be classified according to PCC rules defined in the PCEF 34 and be assigned to a certain service.

The PCEF 34 may be responsible for enforcing policies with respect to authentication of subscribers, authorization to access and services, accounting, and mobility. The PCRF 30 may be responsible for managing individual policies defining network, application, and subscriber conditions that must be met in order to successfully deliver a service or maintain the QoS of a given service.

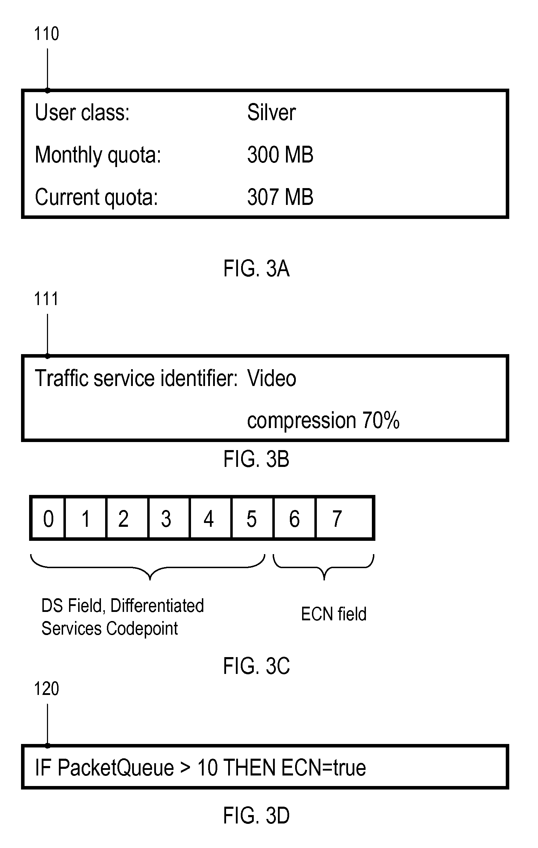

The subscriber database 38, which may be a standalone database or integrated into an existing subscriber database such as a Home Subscriber Server (HSS), may include information such as entitlements, rate plans, user classification, guaranteed QoS etc. The subscriber database 38 may provide subscriber profile data such as a subscriber's allowed services, a pre-emption priority for each allowed service, information on a subscriber's QoS parameters, e.g., a subscribed guaranteed bandwidth QoS, a subscriber's charging related information, e.g., location information relevant for charging, a subscriber category, e.g., whether the subscriber is a gold user to be provided with a high QoS or a silver or bronze user to be provided with lower QoS. In FIG. 3A, a simple embodiment of such subscriber profile data 110 is exemplarily illustrated.

The AF 50 is an element which may be configured to provide one or more packet-based services to a UE connected to the mobile network. These services can be delivered in a network layer which is different from a network layer in which the service was requested. For example, the service can be requested in a signalling layer, e.g., by signalling between the UE and the AF 50, and delivered in the data layer or data plane, e.g., by transferring data packets between the GW 26 and the UE. Examples of AFs are functions of an IP Multimedia Subsystem (IMS) of the mobile communications network, such as a Proxy Call Session Control Function (P-CSCF), or application servers such as a Session Initiation Protocol (SIP) application server. The AF may also be used to control acceleration or prioritization of content delivery from a content provider. The AF 50 typically communicates with the PCRF 30 to transfer session information, e.g., description of data to be delivered in the transport layer. As mentioned above, this may also involve authorization of a service by the PCRF 30 upon receiving an authorization request from the AF 50.

The TDF 36 may support packet inspection and service classification, e.g., by performing DPI. For this purpose, data packets, e.g., IP data packets, of a data traffic may be classified according to rules configured in the TDF 36 so that the data packets of a data traffic can be assigned to a certain type of service or content type or application. A simple embodiment of such a content type 111 is exemplarily illustrated in FIG. 3B. The PCRF 30 can then control the provision of appropriate network resources for this service, e.g., by installing or configuring corresponding PCC rules in the PCEF 34. The TDF 36 can be implemented as a standalone node or can be integrated in another network node.

As further illustrated in FIG. 1, the nodes of the PCC architecture are coupled to each other by interfaces or reference points termed as Gx, Gxx, Gy, Gz, Sd, Sp, Sy, and Rx. The Gx reference point resides between the PCRF 30 and the GW 26, and allows for communication between the PCRF 30 and the PCEF 34. The Gxx reference point resides between the PCRF 30 and the BBERF 39. The Gy reference point resides between the GW 26 and the OCS 44. The Gz reference point resides between the GW 26 and the OFCS 42. The Rx reference point resides between the AF 50 and the PCRF 30. The Sd reference point resides between the TDF 36 and the PCRF 30. The Sp reference point resides between the SPR 38 and the PCRF 30. Details concerning the implementation of these interfaces and protocols can be found in the 3GPP TSs, e.g., 3GPP TSs 23.203, 29.212, 29.213, and 29.214. It is to be understood that the PCC architecture of FIG. 1 is intended to show exemplary elements which may be involved in implementation of embodiments of the invention, but that also other elements could be involved in implementation of embodiments of the invention. For example, the PCC architecture of FIG. 1 could be modified with respect to the nodes interfaced to the PCRF 30 and the respective interfaces. For example, the subscriber database 38 could be implemented as a UDR and the interface of the subscriber database 38 to the PCRF 30 could be implemented by the Ud reference point. Also, the PCC architecture could include a V-PCRF (Visited PCRF) to be used for users which are roaming, and the PCRF 30 could be provided with an interface to the V-PCRF, e.g., implemented by the S9 reference point. Moreover, it is to be understood that multiple instances of some nodes may be provided, e.g., multiple GWs and corresponding PCEFs, multiple BBERFs, additional TDFs, or multiple AFs.

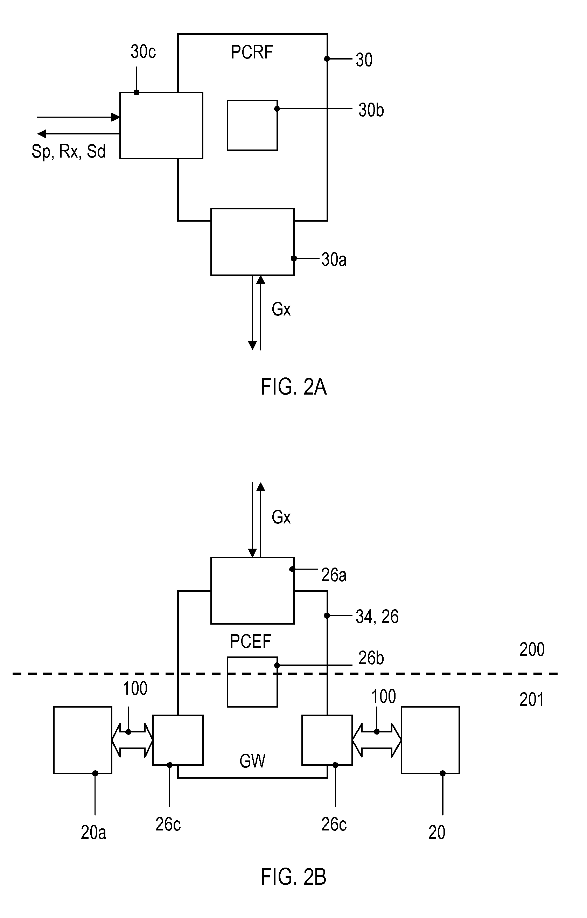

For implementing signalling to the PCRF 30, a node connected to the PCRF, e.g., the AF 50 or the TDF 36, may generate and send various types of messages to the PCRF 30. The PCRF 30 can receive these messages via an interface 30c (FIG. 2A). For decoding and processing of the messages, the PCRF 30 can comprise a processing unit 30b. One type of such messages may be an AAR command, e.g., as specified in 3GPP TS 29.214. An AAR command may initiate a session between the PCEF 34 and the PCRF 30. This type of AAR command may also be referred to as initial AAR command. The AAR command may also be used for conveying information during an ongoing session between the PCEF 34 and the PCRF 30, e.g., for updating information provided in the initial AAR command. The latter type of AAR command may also be referred to as update AAR command. A further type of such messages may be a Session Termination Request (STR) command, e.g., as specified in 3GPP TS 29.214. The STR command terminates a session between the PCEF 34 and the PCRF 30. Still further types of such messages include a Re-Authorization Answer (RAA) command and an Abort Session Answer (ASA) command. The RAA command and the ASA command may be sent by the PCEF 34 in response to receiving a message from the PCRF 30. In particular, the RAA command may be sent in response to a Re-Authorization Request (RAR) command from the PCRF 30, and the ASA command may be sent in response to an Abort Session Request (ASR) command from the PCRF 30.

The PCRF 30 comprises an interface 30a for communicating with the PCEF 34 via Gx (FIG. 2A). Likewise, the PCEF 34 comprises a respective interface 26a for receiving the Gx messages from the PCRF 30 (FIG. 2B). The PCEF 34 / GW 26 comprises a processing unit 26b for decoding and processing of the messages received via the interface 26a. In FIG. 2B, furthermore, a data traffic 100 handled by two ports 26c of the GW 26 on which the PCEF 34 is implemented is also illustrated. The data traffic 100 or Service Data Flow can contain packetized data, e.g., IP packets between two entities 20, 20a. For example, the entity 20 may be the receiving end-point of the data traffic 100, e.g., the UE. The entity 20a can be the sending end-point. The control plane 200 and data plane 201 boundary is indicated in FIG. 2B by the dashed line.

In particular, the GW 26 can be configured to signal congestion using ECN. This may be done in order to avoid queue overflow in congestions situations. For example, if the rate of incoming packets is larger than the rate of processed and forwarded packets, congestion is impending. More detailed analysis of recipient congestion may be based on QoS parameters for the data traffic 100. For example, congestion signalling 112 (see FIG. 3C) using ECN relies on the two least-significant bits 6 and 7 of the Differentiated Service (DiffServ) field in the IP header according to the Internet Protocol (IP) Version 4 or Version 6 standard. If congestion is impending or encountered, these bits can be set or overwritten by the respective intermediate node or gateway of the data plane (here GW 26), e.g., as "11". ECN capable is typically signalled as "01" or "10" and not capable as "00". For details, see IETF RFC3168.

Conventionally, this congestion signalling is due to properties of the data traffic 100 residing in the data plane 201 of the mobile communications network. If certain gateways in the data plane 201, such as the gateway 26 of the PCEF 34 encounter incipient congestion, ECN bits 112 are set or overwritten. The receiving end-point 20 can take appropriate actions to reduce the send rate of the sending end-point 20a, e.g., increase a compression factor etc.

Concepts are described herein which allow for control of congestion signalling 112 by control plane functions. For example, the PCRF 30 can instruct the GW 26 via the PCEF 34 to signal or not signal congestion 112. In other words, the PCRF 30 in various embodiments can instruct congestion signalling to be performed or suppressed. Thus, the congestion signalling 112 may be referred to as "artificial", as in various embodiments situations may occur where the PCRF 30 enforces (suppresses) congestions signalling 112 where there is in fact no congestion (a large congestion) encountered at GW 26. In other words, the current congestion status of the mobile communications network, in particular of GW 26, may be only one of a plurality of criterions for signalling congestion 112 - it is even possible that the current congestion status of the mobile communications network is not at all taken into account for the decision when to signal congestion. Yet intermediate cases are possible, i.e., where the PCRF 30 alters or sets the rules for congestion signalling 112 and the decision when to signal congestion is - amongst other criterions - also based on the current congestion status of the data plane 201 of the mobile communications network.

Reference is made to FIG. 3D to this respect: Here a congestion signalling policy 120 is exemplarily illustrated. If the packet queue at the respective GW 26 exceeds a signalling threshold of ten, the PCEF 34 starts ECN signalling 112. Hereinafter, details of the techniques which allow for selecting of such congestions policies 120 by the PCRF 30 are discussed.

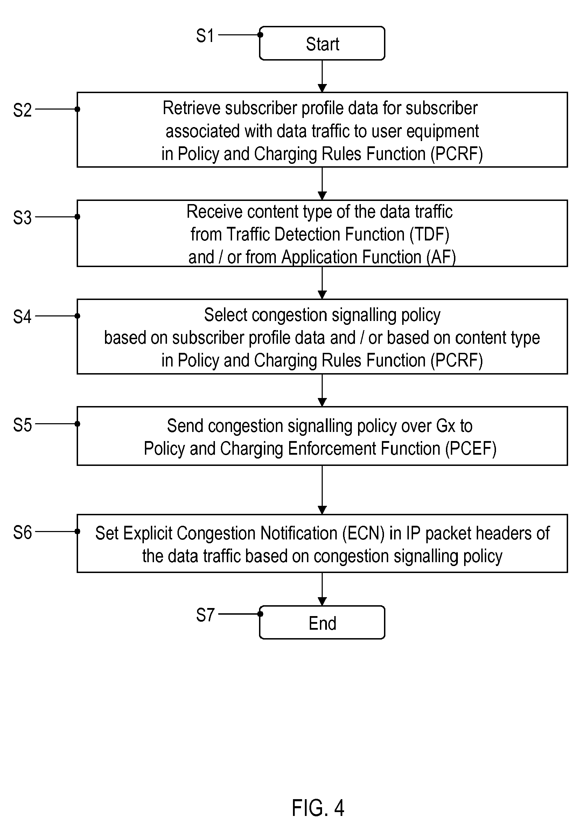

In FIG. 4, a flowchart illustrates a respective method. The method starts in step S1. In step S2, the PCRF 30 retrieves the subscriber profile data 110 from the SPR 38. The subscriber profile data 110 specifies charging and QoS parameters of the subscriber or user associated with the UE 20.

In step S3, the content type 111 of the data traffic 100 is determined by the PCRF 30. This can include receiving the content type 111 from the TDF 36 and / or from the AF 50.

At this point, the PCRF 30 is aware of the policy and charging rules of the particular user causing the data traffic 100 to and / or from the UE 20. Also, the PCRF 30 is aware of the particular content or application of the data packets being part of the data traffic 100. This enables the PCRF 30 in step S4 to select the congestion signalling policy 120 based on some or all of these elements. For example, in step S4, the selecting of the congestion signalling policy 120 can be based solely on the content type 111 or solely on the subscriber profile data 110 or on both elements. It is even possible that the selecting in step S4 is independent of both these elements - the selecting may be the same for all data traffic handled by the GW 26, i.e., data traffic belonging to other end-points than the end-points 20, 20a.

In various embodiments, the selecting may be based on the content type 111. For example, it is possible that for the data traffic 100 carrying packets of a particular content, e.g., video or voice etc., congestion signalling 112 causes a codec rate adaptation, so-called rate adaptive coding, in the sending end-point 20a in order to decrease or increase the volume of the data traffic 100 in the (impending) congestion situation. For details, see 3GPP TSs 23.401 or 26.114. Therefore, if the content type 111 indicates the possibility of such a codec rate adaptation, the selecting in step S4 may take this into account. If for example, a dependency of the amount of congestion signalling 112 on the amount of codec rate adaptation is known by the PCRF 30, this may serve as the basis for the selecting of the congestion signalling policy 120.

In step S5, the congestion signalling policy 120 is sent via Gx from the PCRF 30 to the PCEF 34. For this, particular attribute value pairs (AVP) can be reserved in the Gx interface. In step S6, the PCEF 34 / GW 26 selectively signals congestions 112 based on the received congestion signalling policy 120. Further details of step S6 are presented hereinafter.

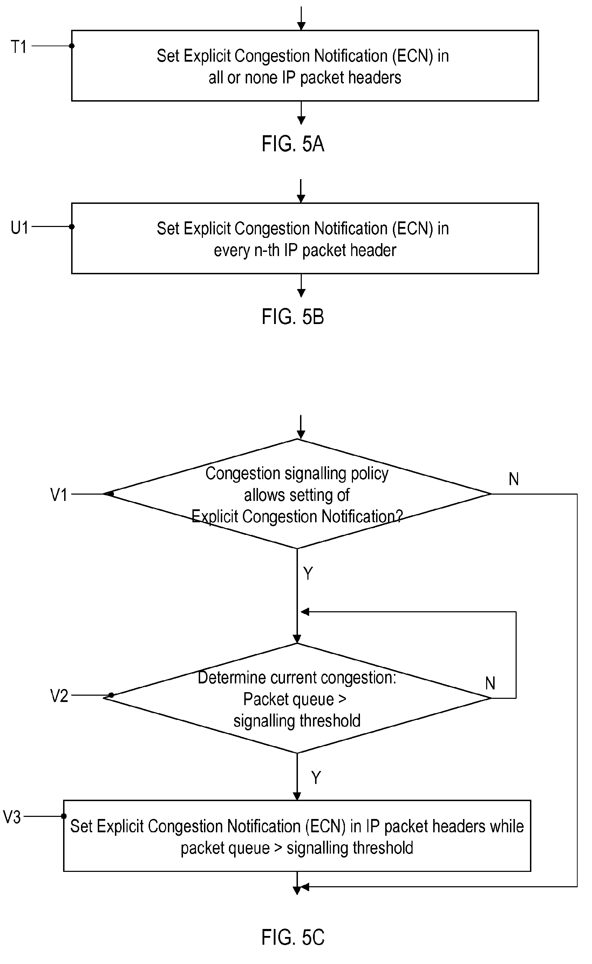

For example, in a simple embodiment, the congestion signalling policy 120 may be a signalling enforcement indicator either enforcing or suppressing congestion signalling 112 (FIG. 5A: step T1). It is, e.g., possible that the congestion signalling 112 is enforced by the PCRF 30 via the congestion signalling policy 120 for every packet of the data traffic 100. The effect of this shall be explained hereinafter: a case is considered, where the congestion is signalled for an ECN enabled video or voice data traffic 100, see 3GPP TSs 23.401, 26.114. The data traffic 100 is associated with a guaranteed bit rate (GBR). If the data traffic 100 runs at a bit rate which is higher than the GBR, e.g., as is the case for Maximum Bit Rate (MBR) > GBR bearers and if congestion is signalled via setting of the ECN bits 112 (cf. FIG. 3C), then the sending end-point 20a will eventually reduce the send rate or volume of the data traffic 100 until it equals GBR. The user may experience this as a higher compression rate and, therefore, a respectively limited audio / video quality. For example, when the subscriber's monthly quota of, e.g., voice minutes, data volume, etc., exceeds a threshold (as indicated, e.g., by the subscriber profile data 100) then the network operator may determine such a congestion signalling policy as applicable to provide the subscriber with reduced voice / video quality, e.g., until the quota falls below the threshold again.

In various embodiments it is possible that the enforcement indicator instructs to signal intermediate congestion. This may be achieved by signalling congestion 112 in every n-th packet (n being an integer number) of the data traffic 100, e.g., every 2nd or 3rd or 4th etc. packet (cf. FIG. 5B, step U1). For example, in the embodiment as described above where the content type 111 indicates codec rate adaptation functionality of the end-points 20, 20a in case of signalled congestion 112, the number n may depend on the current codec rate and a desired codec rate. For example, the congestion signalling 112 may be performed for a larger (smaller) number of packets per time if the current codec rate is above (below) a desired codec rate.

In various other embodiments, the signal enforcement indicator may merely instruct the PCEF 34 to signal congestion, but it may be irrelevant if the signalling of congestion 112 occurs in every packet or every 2nd packet, or in whatever pattern.

In particular, in case the congestion signalling policy 120 relates to an enforcement indicator, it should be understood that the signalling of congestion 112 at the PCEF 34 may be independent of the current congestion status of the communications network. In other words, it may be dispensable that the PCRF 30 and / or the PCEF 34 is informed of the current congestion status of the network when signalling congestion 112. To this respect, the signalling of congestion may be labelled "artificial" as the congestion - even though signalled (not signalled) - is in fact not encountered (encountered) in the GW 26.

In view of the concept of controlling congestion signalling in the data plane from the control plane, many variations of the congestion signalling policy 120 are possible. Conceptually, the decision making, i.e., determining when to signal congestion 112 and when not to signal congestion, may reside fully or partially in the control plane 200, e.g., in the PCRF 30, and respectively to some larger or smaller degree in the data plane 201, e.g., in the PCEF 34.

For example, in a simple embodiment, the PCRF 30 may specify whether for certain data traffic 100 associated with a particular subscriber, congestion signalling 112 is at all allowed or whether congestion signalling 112 is suppressed. Only if congestion signalling 112 is principally allowed, the PCEF 34 / GW 26 - based on different criterions - may selectively signal congestion 112 or not. For example, congestion signalling 112 can be used by the end-points 20, 20a to optimize the properties of the data traffic 100 and thereby avoid packet loss - it can therefore improve the user experience. It is therefore possible that in various embodiments congestion signalling 112 is selected to be available to certain subscriber classes, e.g., only to gold and silver users (as specified via the subscriber profile data 110), but not to bronze users. When incipient congestion is encountered for gold or silver users, congestion signalling 112 is commenced - yet if incipient congestion is encountered for bronze user, no congestion signalling 112 takes place and packets may be eventually dropped and lost due to queue or buffer overflow.

In further scenarios, the congestion signalling threshold may be lower for bronze user than for gold and silver users. In other words, the PCRF 30 can be configured to select the signalling threshold based on the subscriber profile data 110. Then, if congestion is impending, first of all for the data traffic 100 of bronze users congestion signalling 112 is commenced - for these bronze users, e.g., the data rate reduction will occur and by this the congestion is avoided. For the gold and silver users the initial (high) data rate prevails and the experienced quality is unaffected. Therefore, by signalling congestion preferably for certain subscriber classes, other subscriber classes can be privileged.

Of course, these and other examples are only illustrative and different qualitative and quantitative dependencies of the congestion signalling 112, e.g., on the content type 111 and on the subscriber profile data 110 are possible.

In the embodiment of FIG. 3D, the congestion signalling policy 120 comprises a signalling threshold as discussed above. The signalling threshold may in general specify criterions relating to the current congestion status of the mobile congestion network which trigger congestion signalling 112 by the PCEF 34. For example, these criterions may comprise a packet queue or signalling threshold: if the packet queue at the respective GW 26 exceeds this signalling threshold, the PCEF 34 starts ECN signalling 112. For example, the signalling threshold may be larger (smaller) for gold (silver, bronze) users as determined by the subscriber profile data 110. A respective flow diagram is illustrated in FIG. 5C: in step V1, it is determined whether the congestion signalling policy 120 allows congestion signalling 112 at all, e.g., based on the congestion signalling policy 120 which may include respective instructions; these instructions may be selected based on the subscriber profile data 110 and / or the content type 111 and / or other criterions. If congestion signalling is allowed, in step V2, the current congestion status is determined by the PCEF 34 by comparing the current packet queue with the signalling threshold. For example, the signalling threshold or packet queue threshold can be comprised in the congestion signalling policy 120 received from the PCRF 30. The PCRF 30 can select the signalling threshold based on the subscriber profile data 110 and / or the content type 111 and / or other criterions. In step V3, the congestions signalling 112 is performed by setting the ECN bits (cf. FIG. 3C). Variations are possible - for example, step V3 could comprise either one of steps T1 or U1 of FIGS. 5A or 5B. If in step V1 it is determined than congestion signalling 112 is not at all allowed, steps V2 and V3 are skipped.

As can be seen from the above, in the embodiment of FIG. 5C, the determining whether to signal congestion 112 or not resides partially in the control plane (selecting of the congestion signalling policy 120) and partially in the data plane (determining current congestion).

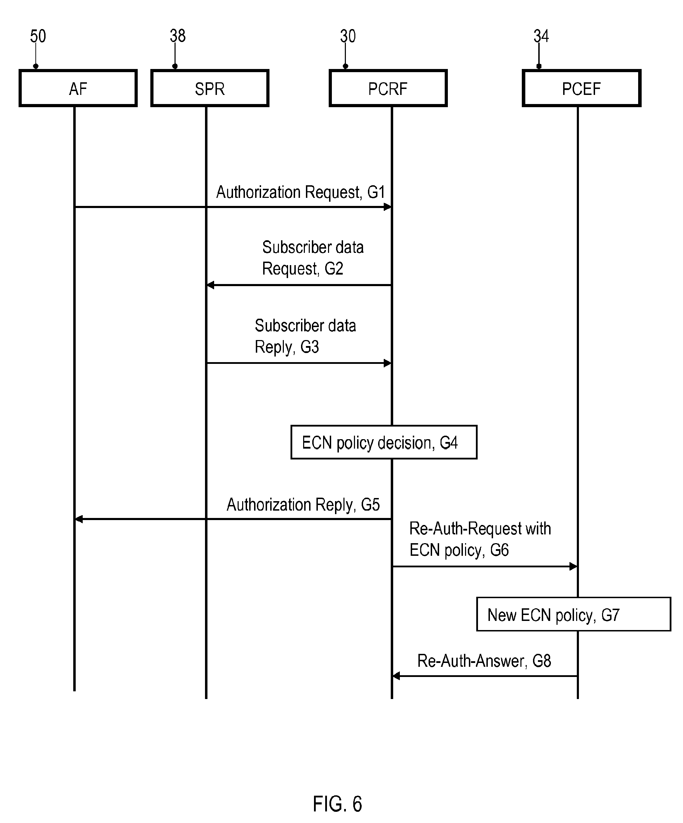

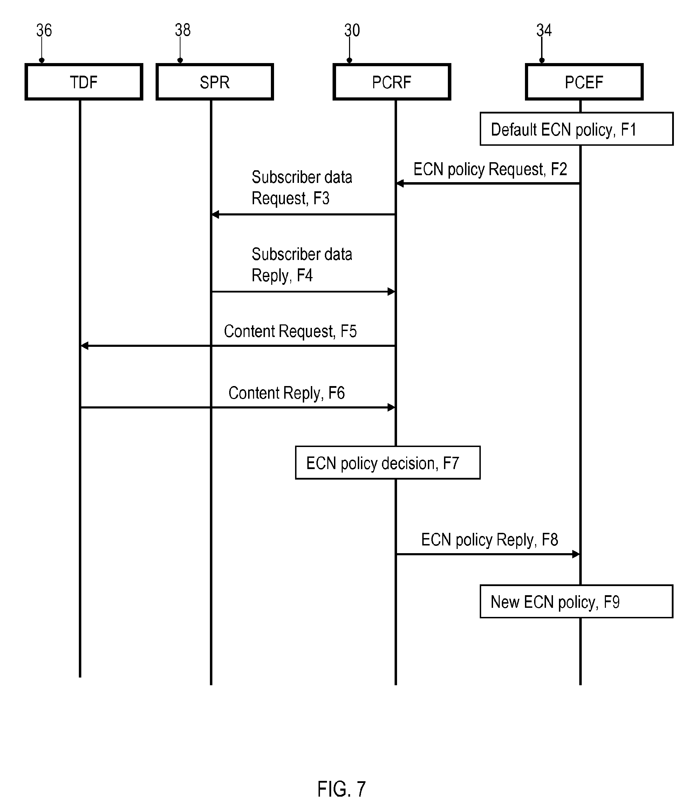

In FIGS. 6 and 7 signalling diagrams between the SPR 38, PCRF 30, PCEF 34, and the AF 50 (in FIG. 6) or the TDF 36 (in FIG. 7), respectively, are depicted.

First, turning to FIG. 6, in step G1 an AAR is sent from the AF 50 to the PCRF 30 in order to establish the data traffic 100 for a certain application to and/or from the UE 20. In step G2, the PCRF 30 requests subscriber profile data 110 from the SPR 38 using a Subscriber Data Request. The PCRF in step G3 retrieves the subscriber profile data 110 from the SPR 38.

In step G4, the PCRF selects the particular congestion signalling policy 120 to be applied to data traffic 100 and, in step G5, sends the AAR to the AF 50.

In step G6, a RAR is transmitted via the Gx interface from the PCRF 30 to the PCEF 34 via Gx. The RAR comprises the congestion signalling policy 120 of step G4 and may comprise further PCC rules. Certain AVPs may be dedicated for the congestion signalling policy 120. This situation may correspond to unsolicited provisioning via the Gx interface to the PCEF 34 (also referred to as Push-procedure). For details, see 3GPP TS 29.212.

The PCEF 34 in step G7 implements the congestion signalling policy 120 of step G6 and sends an RAA G8 to the PCRF 30.

It is possible that the PCEF 34 solicits the congestion signalling policy 120 from the PCRF 30; a scenario often referred to as Pull-procedure over Gx. Such a scenario is illustrated in FIG. 7.

The PCEF 34 starts in step F1 with a default or predefined congestion signalling policy. In step F2, a ECN request is send to the PCRF 30, for example as part of a Credit Control Request (CCR). For example, the CCR can contain identification information on the particular user equipment, e.g., unique identifiers. Based on these unique identifiers, the PCRF 30 can solicit and receive the subscriber profile data 110 in steps F3, F4.

Once the subscriber profile data 110 allows the PCRF 30 to proceed with charging and policing, in steps F5 and F6 a content request and reply can be send to the TDF 36. The TDF can, e.g., perform DPI to provision the detailed content type 111. Based on the subscriber profile data 110 and the content type 111, the PCRF 30 can, in step F7, select the congestion signalling policy an transmit it to the PCEF 34 (step F8). Step F8 can be part of a Credit Control Answer (CCA) message. In step F9, the PCEF 34 implements the updated congestion signalling policy 120.

While, with respect to FIG. 6, the Push-procedure has been discussed in connection with the AF 50 and, with respect to FIG. 7, the Pull-procedure has been discussed in connection with the TDF 36, this should not be construed as being limiting. Variations are possible; for example, the TDF 36 may be employed as part of a Push-procedure and the AF 50 as part of a Pull-procedure.

As can be seen, the concepts as explained allow for controlling congestion signalling in the data plane based on logic residing the control plane.

It is to be understood that the examples and embodiments as explained above are merely illustrative and susceptible to various modifications. For example, the concepts could be used in other types of networks, e.g., using other types of policy controllers than the above-mentioned PCRF 30. Depending on the type of the policy controller, also other types of interfaces than the above-mentioned Gx interface may be used, e.g., using other diameter-based protocols. Also, it is to be understood that the illustrated and described nodes, e.g., AF 50, TDF 36 or PCRF 30, may each be implemented by a single device or by multiple devices, e.g., a cloud of interconnected devices or server farm. Further, it is to be understood that the above concepts may be implemented by using correspondingly designed software in existing network devices, or by using dedicated network device hardware. For example, the functionality of the PCEF 34 may also be provided as a standalone unit. Also, the PCRF 30, respectively the policy controller, may be implemented as a standalone hardware or may be part of an entity also providing further functionality.

Moreover, embodiments and entities have been discussed which relate to a mobile communications network according to the 3GPP technical specifications. However, the concepts according to various embodiments can be used also in different types of networks, for example wired networks according to other technical specifications. In such a case, the various functions may be implemented on different units as defined or standardized in the particular context. For example, the node may be a Broadband Network Gateway (PNG) and the policy controller may be implemented as part of a Broadband Policy and Charging Function (BPCF).

## Claims

1. A policy controller (30) of a communications network, comprising:
- an interface (30a) for communicating with a node (26) of the communications network; and
- a processing unit (30b) being configured to select a congestion signalling policy (120) for data traffic (100) of a user equipment connected to the communications network,
wherein the interface (30a) is configured to send the congestion signalling policy (120) to the node (26),
wherein the congestion signalling policy (120) includes instructions for the node (26) when to signal congestion.

2. The policy controller (30) of claim 1,
further configured to retrieve, from a subscriber profile repository (38), subscriber profile data (110) of a subscriber associated with the user equipment,
wherein the processing unit (30b) is further configured to select the congestion signalling policy (120) based on the subscriber profile data (110).

3. The policy controller (30) of any of claims 1 or 2,
further configured to determine a content type (111) of the data traffic (100) of the user equipment,
wherein the processing unit (30b) is further configured to select the congestion signalling policy (120) based on the content type (111) of the data traffic (100).

4. The policy controller (30) of claim 3,
wherein, if the content type (111) is voice or video traffic with a variable codec rate, the processing unit (30b) is further configured to select the congestion signalling policy (120) based on the variable codec rate of the data traffic (100).

5. The policy controller (30) of any of the preceding claims,
wherein the processing unit (30b) is further configured to select a signalling threshold for selectively signalling congestion of the communications network by the node (26),
wherein the instructions of the congestion signalling policy (120) include the selected signalling threshold.

6. The policy controller (30) of any of claims 1-4,
wherein the processing unit (30b) is further configured to selectively set a signalling enforcement indicator for enforcing congestion signalling by the node (26),
wherein the instructions of the congestion signalling policy (120) include the signalling enforcement indicator.

7. A node (26) of a communications network, comprising:
- an interface (26a) for communicating with a policy controller (30) and configured to receive a congestion signalling policy (120) for data traffic (100) of a user equipment connected to the communications network from the policy controller (30); and
- a processing unit (26b) being configured to selectively signal congestion of the communications network to a recipient of the data traffic (100) based on the received congestion signalling policy (120).

8. The node (26) of claim 7,
wherein the processing unit (26b) is further configured to determine a current congestion status based on the data traffic (100),
wherein the selectively signalling congestion is further based on the current congestion status.

9. The node (26) of claim 8,
wherein the congestion signalling policy (120) includes instructions for the node (26) when to signal congestion,
wherein the instructions of the congestion signalling policy (120) include a signalling threshold,
wherein the processing unit (26b) is further configured to execute a threshold comparison of the current congestion status and the signalling threshold,
wherein the selectively signalling congestion is further based on the threshold comparison.

10. The node (26) of any of claims 7-9,
wherein the processing unit (26b) is further configured to, based on the congestion signalling policy (120), selectively signal a predefined congestion selected from the group consisting of: zero congestion, maximum congestion, intermediate congestion.

11. A method of controlling congestion signalling in a communications network, the method comprising:
- in a policy controller (30) selecting a congestion signalling policy (120) for data traffic (100) of a user equipment connected to the communications network,
wherein the congestion signalling policy (120) includes instructions for a node (26) of the communications network when to signal congestion,
- sending the congestion signalling policy (120) to the node (26).

12. The method of claim 11, further comprising:
- retrieving, from a subscriber profile repository (38), subscriber profile data (110) of a subscriber associated with the user equipment,
wherein the selecting is further based on the subscriber profile data (110).

13. The method of any of claims 11 or 12, further comprising:
- determining a content type (111) of the data traffic (100) of the user equipment,
wherein the selecting is further based on the content type (111) of the data traffic (100).

14. A method of signalling congestion in a communications network, the method comprising:
- in a node (26) of the communications network receiving a congestion signalling policy (120) for data traffic (100) of a user equipment connected to the communication network from a policy controller (30),
- in the node (26) selectively signalling congestion of the communication network to a recipient of the data traffic (100) based on the received congestion signalling policy (120).

15. A system for controlling congestion signalling in a communications network, the system comprising:
- a policy controller (30) according to any one of claims 1 - 6; and
- a node (26) of the communications network according to any one of claims 7-10.
